# EUROPEAN PATENT APPLICATION

(11) **EP 4 804 635 A1**
(43) Date of publication of application: **09.09.2026**
(21) Application number: 24887623.7
(22) Date of filing: 11.09.2024
(51) Int. Cl.: H04W 48/16, H04W 4/38

(54) **COMMUNICATION METHOD, DEVICE AND SYSTEM**

(30) Priority: 06.11.2023 CN 202311467445
(71) Applicant: Huawei Technologies Co., Ltd., Shenzhen, Guangdong 518129 (CN)
(72) Inventor: XIE, Xinqian, Shenzhen, Guangdong 518129 (CN); SHAO, Jiafeng, Shenzhen, Guangdong 518129 (CN)
(74) Representative: Gill Jennings & Every LLP
(86) International application number: PCT/CN2024/118180
(87) International publication number: WO 2025/098004

(57) **Abstract**

This application provides a communication method, a device, and a system. The method includes: determining a first sensing amount, where the first sensing amount includes at least one first tuple, the first tuple includes at least one element, and the element includes a delay, a distance, an azimuth angle, a pitch angle, strength, a velocity, or a frequency offset, and a first access network device corresponds to a first radio access technology RAT; obtaining a second sensing amount from a second access network device, where the second sensing amount includes at least one second tuple, the second tuple includes at least one element, the second access network device corresponds to a second RAT, and the second RAT is different from the second RAT; determining a third sensing amount based on the first sensing amount and the second sensing amount, where the third sensing amount includes at least one third tuple, and the third tuple includes at least one element; and sending the third sensing amount to a first core network device. This can aggregate sensing capabilities and improve sensing accuracy.

## Description

This application claims priority to Chinese Patent Application No. 202311467445.6, filed with the China National Intellectual Property Administration on November 6, 2023 and entitled "COMMUNICATION METHOD, DEVICE, AND SYSTEM", which is incorporated herein by reference in its entirety.

### TECHNICAL FIELD

This application relates to the communication field, and in particular, to a communication method, a device, and a system.

### BACKGROUND

In a process of evolution from a 5th generation (5th Generation, 5G) mobile communication system to a 5G-advanced (5G-Advanced, 5G-A) technology, an integrated sensing and communication technology is considered as one of the key technologies that can extend service capabilities of a mobile communication network. A core idea of this technology is to add a sensing capability to the mobile communication network, and construct capabilities of detecting, tracking, and imaging a target, so that sensing and communication capabilities are integrated into one network, thereby achieving harmonious coexistence and mutual benefit.

Distinguished based on mode, the sensing technology may generally include single-station sensing and dual-station sensing. However, regardless of which sensing mode is used, sensing capabilities cannot be aggregated, resulting in degraded sensing performance.

### SUMMARY

This application provides a communication method, to aggregate sensing capabilities and improve sensing accuracy.

According to a first aspect, this application provides a communication method, including: determining a first sensing amount, where the first sensing amount includes at least one first tuple, the first tuple includes at least one element, the element includes a delay, a distance, an azimuth angle, a pitch angle, strength, a velocity, or a frequency offset, and a first access network device corresponds to a first radio access technology (Radio Access Technology, RAT); obtaining a second sensing amount from a second access network device, where the second sensing amount includes at least one second tuple, the second tuple includes at least one element, the second access network device corresponds to a second RAT, and the first RAT is different from the second RAT; determining a third sensing amount based on the first sensing amount and the second sensing amount, where the third sensing amount includes at least one third tuple, and the third tuple includes at least one element; and sending the third sensing amount to a first core network device.

The communication method provided in this application may be applied to the first access network device. The first access network device obtains the third sensing amount by using the first sensing amount and the second sensing amount. For example, the first sensing amount includes the at least one first tuple, and each tuple includes one or more elements. The second sensing amount includes at least one first tuple, and each tuple includes one or more elements. The first base station may obtain the third tuple based on the first tuple and the second tuple, where the third sensing amount includes a plurality of third tuples. After the first base station sends the third sensing amount to the first core network device, the first core network device may obtain the third tuples and an element in each third tuple based on the third sensing amount, and obtain, based on one or more of elements such as a delay, a distance, an azimuth angle, a pitch angle, strength, a velocity, or a frequency offset, data required by the first core network device to provide a sensing service, to perform the sensing service. In this way, sensing capabilities can be aggregated. The provided third sensing amount may include more elements, or values of the elements may be more accurate, improving sensing accuracy of the sensing service performed by the first core network device.

In a possible implementation, the method further includes: sending the first sensing amount to the second access network device. The second access network device receives the first sensing amount, and obtains a fourth sensing amount based on the first sensing amount, the second sensing amount, and a sensing service of the second core network device. In this method, sensing amounts can be exchanged between base stations to aggregate the sensing amounts. In this way, a manner of transmitting a sensing amount is more flexible. If one base station is faulty, another base station can still aggregate the sensing capabilities, and provide a more accurate sensing service for a core network device.

In a possible implementation, the first RAT is one of long term evolution (Long term evolution, LTE), 5G new radio (New Radio, NR) NR, 5G-advanced (5G-Advanced, 5G-A), and a 5G next generation technology (for example, 5.5G or 6G), the second RAT is one of LTE, 5G NR, 5G-A, and a 5G next generation technology (for example, 5.5G or 6G), and the first RAT is different from the second RAT. For example, the first RAT is 5G or 5G-A, and the second RAT is 6G or LTE.

In a possible implementation, one tuple corresponds to one target, the target includes an electromagnetic scatterer or an object, and the tuple includes the first tuple, the second tuple, and the third tuple. To be specific, the first sensing amount includes at least one tuple, each tuple includes at least one element, the second sensing amount includes at least one tuple, each tuple includes at least one element, and a tuple of the third sensing amount is obtained based on the tuples in the first sensing amount and the second sensing amount. In this application, the first tuple and the second tuple are respectively the tuples of the first sensing amount and the second sensing amount for differentiation, but it does not mean that the first tuple and the second tuple represent different meanings.

In a possible implementation, the first base station may further send the first sensing amount to a communication apparatus. The communication apparatus may be an apparatus deployed in a communication network in which the first base station is located, and is mainly configured to: receive the first sensing amount and the second sensing amount, obtain the third sensing amount based on the first core network device, obtain the fourth sensing amount based on the second core network device, send the third sensing amount to the first core network device, and send the fourth sensing amount to the second core network device. In this deployment manner, because the communication apparatus is deployed flexibly, a scenario in which sensing capabilities are aggregated is more flexible, and costs of an existing device are not increased.

According to a second aspect, this application provides a communication method, including: obtaining a first sensing amount from a first access network device, where the first sensing amount includes at least one first tuple, the first tuple includes at least one element, the element includes a delay, a distance, an azimuth angle, a pitch angle, strength, a velocity, or a frequency offset, and the first access network device corresponds to a first RAT; obtaining a second sensing amount from a second access network device, where the second sensing amount includes at least one second tuple, the second tuple includes at least one element, the second access network device corresponds to a second RAT, and the first RAT is different from the second RAT; determining a third sensing amount based on the first sensing amount and the second sensing amount, where the third sensing amount includes at least one third tuple, and the third tuple includes at least one element; and sending the third sensing amount to a first core network device.

In a possible implementation, the method further includes: determining a fourth sensing amount based on the first sensing amount and the second sensing amount, where the fourth sensing amount includes at least one fourth tuple, and the fourth tuple includes at least one element; and sending the fourth sensing amount to a second core network device.

In a possible implementation, the first RAT is one of LTE, 5G NR, 5G-A, and a next generation 5G technology (for example, 5.5G or 6G), the second RAT is one of LTE, 5G NR, 5G-A, and a next generation 5G technology (for example, 5.5G or 6G), and the first RAT is different from the second RAT. For example, the first RAT is 5G or 5G-A, and the second RAT is 6G or LTE.

In a possible implementation, one tuple corresponds to one target, the target includes an electromagnetic scatterer or an object, and the tuple includes the first tuple, the second tuple, the third tuple, and the fourth tuple.

According to a third aspect, this application provides a communication method, including: determining a second sensing amount, where the second sensing amount includes at least one second tuple, each second tuple includes at least one element, and a second access network device corresponds to a second RAT; obtaining a first sensing amount from a first access network device, where the first sensing amount includes at least one first tuple, each first tuple includes at least one element, the element includes a delay, a distance, an azimuth angle, a pitch angle, strength, a velocity, or a frequency offset, the first access network device corresponds to a first RAT, and the first RAT is different from the second RAT; determining a fourth sensing amount based on the first sensing amount and the second sensing amount, where the fourth sensing amount includes at least one fourth tuple, and each fourth tuple includes at least one element; and sending the fourth sensing amount to a second core network device.

In a possible implementation, the method further includes: sending the second sensing amount to the first access network device.

In a possible implementation, the first RAT is one of LTE, 5G NR, 5G-A, and a next generation 5G technology (for example, 5.5G or 6G), the second RAT is one of LTE, 5G NR, 5G-A, and a next generation 5G technology (for example, 5.5G or 6G), and the first RAT is different from the second RAT. For example, the first RAT is 5G or 5G-A, and the second RAT is 6G or LTE.

In a possible implementation, one tuple corresponds to one target, the target includes an electromagnetic scatterer or an object, and the tuple includes the first tuple, the second tuple, and the fourth tuple.

According to a fourth aspect, this application provides a communication method. The communication method is applied to a first core network device, and the method includes: receiving a third sensing amount; and providing a sensing service based on the third sensing amount, where the third sensing amount is sent by a first base station, or the third sensing amount is sent by a communication apparatus. The third sensing amount includes at least one third tuple, each third tuple is obtained based on a first tuple and a second tuple, the third tuple includes at least one element, the element includes a delay, a distance, an azimuth angle, a pitch angle, strength, a velocity, or a frequency offset, the first tuple is a tuple of a first sensing amount, the second tuple is a tuple of a second sensing amount, and the first core network device corresponds to a first RAT.

In a possible implementation, the first RAT is one of LTE, 5G NR, 5G-A, and a next generation 5G technology (for example, 5.5G or 6G), for example, the first RAT is 5G or 5G-A.

In a possible implementation, one tuple corresponds to one target, the target includes an electromagnetic scatterer or an object, and the tuple includes the first tuple, the second tuple, and the fourth tuple.

According to a fifth aspect, this application provides a communication method. The communication method is applied to a second core network device, and the method includes: receiving a fourth sensing amount; and providing a sensing service based on the fourth sensing amount, where the fourth sensing amount is sent by a second base station, or the fourth sensing amount is sent by a communication apparatus. The fourth sensing amount includes at least one fourth tuple, each fourth tuple is obtained based on a first tuple and a second tuple, the fourth tuple includes at least one element, the element includes a delay, a distance, an azimuth angle, a pitch angle, strength, a velocity, or a frequency offset, the first tuple is a tuple of a first sensing amount, the second tuple is a tuple of a second sensing amount, and the first core network device corresponds to a second RAT.

In a possible implementation, the second RAT is one of LTE, 5G NR, 5G-A, and a next generation 5G technology (for example, 5.5G or 6G), for example, the second RAT is 6G or LTE.

In a possible implementation, one tuple corresponds to one target, the target includes an electromagnetic scatterer or an object, and the tuple includes the first tuple, the second tuple, and the fourth tuple.

According to a sixth aspect, this application provides a first access network device, including: a processing module, configured to determine a first sensing amount, where the first sensing amount includes at least one first tuple, the first tuple includes at least one element, the element includes a delay, a distance, an azimuth angle, a pitch angle, strength, a velocity, or a frequency offset, and the first access network device corresponds to a first RAT; and an obtaining module, configured to obtain a second sensing amount from a second access network device, where the second sensing amount includes at least one second tuple, the second tuple includes at least one element, the second access network device corresponds to a second RAT, the second RAT is different from the second RAT, and the processing module is further configured to determine a third sensing amount based on the first sensing amount and the second sensing amount, where the third sensing amount includes at least one third tuple, and the third tuple includes at least one element; and a sending module, configured to send the third sensing amount to a first core network device.

In a possible implementation, the sending module is further configured to send the first sensing amount to the second access network device.

In a possible implementation, the first RAT is 5G or 5G-A, and the second RAT is 6G or LTE.

In a possible implementation, one tuple corresponds to one target, the target includes an electromagnetic scatterer or an object, and the tuple includes the first tuple, the second tuple, and the third tuple.

According to a seventh aspect, this application provides a communication apparatus. The communication apparatus includes: an obtaining module, configured to obtain a first sensing amount from a first access network device, where the first sensing amount includes at least one first tuple, the first tuple includes at least one element, the element includes a delay, a distance, an azimuth angle, a pitch angle, strength, a velocity, or a frequency offset, the first access network device corresponds to a first RAT, and the obtaining module is further configured to obtain a second sensing amount from a second access network device, where the second sensing amount includes at least one second tuple, the second tuple includes at least one element, the second access network device corresponds to a second RAT, and the second RAT is different from the second RAT; a processing module, configured to determine a third sensing amount based on the first sensing amount and the second sensing amount, where the third sensing amount includes at least one third tuple, and the third tuple includes at least one element; and a sending module, configured to send the third sensing amount to a first core network device.

In a possible implementation, the processing module is further configured to determine a fourth sensing amount based on the first sensing amount and the second sensing amount, where the fourth sensing amount includes at least one fourth tuple, and the fourth tuple includes at least one element. The sending module is further configured to send the fourth sensing amount to a second core network device.

In a possible implementation, the first RAT is 5G or 5G-A, and the second RAT is 6G or LTE.

In a possible implementation, one tuple corresponds to one target, the target includes an electromagnetic scatterer or an object, and the tuple includes the first tuple, the second tuple, the third tuple, and the fourth tuple.

According to an eighth aspect, this application provides a second access network device, including: a processing module, configured to determine a second sensing amount, where the second sensing amount includes at least one second tuple, each second tuple includes at least one element, and the second access network device corresponds to a second RAT; an obtaining module, configured to obtain a first sensing amount from a first access network device, where the first sensing amount includes at least one first tuple, each first tuple includes at least one element, the element includes a delay, a distance, an azimuth angle, a pitch angle, strength, a velocity, or a frequency offset, the first access network device corresponds to a first RAT, the first RAT is different from the second RAT, and the processing module is further configured to determine a fourth sensing amount based on the first sensing amount and the second sensing amount, where the fourth sensing amount includes at least one fourth tuple, and each fourth tuple includes at least one element; and a sending module, configured to send the fourth sensing amount to a second core network device.

In a possible implementation, the sending module is further configured to send the second sensing amount to the first access network device.

In a possible implementation, the first RAT is 5G or 5G-A, and the second RAT is 6G or LTE.

In a possible implementation, one tuple corresponds to one target, the target includes an electromagnetic scatterer or an object, and the tuple includes the first tuple, the second tuple, and the fourth tuple.

According to a ninth aspect, this application provides a first core network device, including: a receiving module, configured to receive a third sensing amount; and a processing module, configured to provide a sensing service based on the third sensing amount, where the third sensing amount is sent by a first base station, or the third sensing amount is sent by a communication apparatus. The third sensing amount includes at least one third tuple, each third tuple is obtained based on a first tuple and a second tuple, the third tuple includes at least one element, the element includes a delay, a distance, an azimuth angle, a pitch angle, strength, a velocity, or a frequency offset, the first tuple is a tuple of a first sensing amount, the second tuple is a tuple of a second sensing amount, and the first core network device corresponds to a first RAT.

In a possible implementation, the first RAT is one of LTE, 5G NR, 5G-A, and a next generation 5G technology (for example, 5.5G or 6G), for example, the first RAT is 5G or 5G-A.

In a possible implementation, one tuple corresponds to one target, the target includes an electromagnetic scatterer or an object, and the tuple includes the first tuple, the second tuple, and the third tuple.

According to a tenth aspect, this application provides a second core network device, including: a receiving module, configured to receive a fourth sensing amount; and a processing module, configured to provide a sensing service based on the fourth sensing amount, where the fourth sensing amount is sent by a second base station, or the fourth sensing amount is sent by a communication apparatus. The fourth sensing amount includes at least one fourth tuple, each fourth tuple is obtained based on a first tuple and a second tuple, the fourth tuple includes at least one element, the element includes a delay, a distance, an azimuth angle, a pitch angle, strength, a velocity, or a frequency offset, the first tuple is a tuple of a first sensing amount, the second tuple is a tuple of a second sensing amount, and the first core network device corresponds to a second RAT.

In a possible implementation, the second RAT is one of LTE, 5G NR, 5G-A, and a next generation 5G technology (for example, 5.5G or 6G), for example, the second RAT is 6G or LTE.

In a possible implementation, one tuple corresponds to one target, the target includes an electromagnetic scatterer or an object, and the tuple includes the first tuple, the second tuple, and the fourth tuple.

According to an eleventh aspect, this application provides a system, including a first access network device, a second access network device, a first core network device, and a second core network device. The first access network device is configured to implement some or all operations in any possible implementation of the first aspect. The second access network device is configured to implement some or all operations in any possible implementation of the third aspect. The first core network device is configured to implement some or all operations in any possible implementation of the fourth aspect. The second core network device is configured to implement some or all operations in any possible implementation of the fifth aspect.

In a possible implementation, the system further includes a communication apparatus, and the communication apparatus is configured to implement some or all operations in any possible implementation of the second aspect.

According to a twelfth aspect, this application provides a communication device. The communication device includes a processor and a storage medium. The storage medium stores instructions. When the instructions are run by the processor, the processor is configured to perform the method according to any one of the foregoing aspects and operations other than sending and receiving operations in any possible implementation of any one of the foregoing aspects.

According to a thirteenth aspect, this application provides a computer-readable storage medium. The computer-readable storage medium stores a computer program. When the computer program is executed by a processor, the method according to any one of the foregoing aspects and some or all operations included in any possible implementation of any one of the foregoing aspects are implemented.

According to a fourteenth aspect, this application provides a computer program product. The computer program product includes instructions. When the instructions are run on a processor, the method according to any one of the foregoing aspects and some or all operations included in any possible implementation of any one of the foregoing aspects are implemented.

According to a fifteenth aspect, this application provides a chip. The chip includes a port circuit and a processor. The port circuit is connected to the processor. The processor is configured to cause the chip to perform the method according to any one of the foregoing aspects and some or all operations included in any possible implementation of any one of the foregoing aspects.

It should be understood that the technical solutions in the second aspect to the fifteenth aspect of this application are consistent with or correspond to the technical solutions in the first aspect of this application, beneficial effects achieved by the aspects and corresponding feasible implementations are similar. Details are not described herein.

### BRIEF DESCRIPTION OF DRAWINGS

To describe the technical solutions in embodiments of this application more clearly, the following briefly introduces the accompanying drawings used in describing embodiments of this application. Apparently, the accompanying drawings in the following description show merely some embodiments of this application, and a person of ordinary skill in the art may still derive other drawings from these accompanying drawings without creative efforts.
FIG. 1 is a diagram of a network architecture of a communication system according to an embodiment of this application;
FIG. 2 is a diagram of a scenario of integrated sensing and communication according to an embodiment of this application;
FIG. 3 is a diagram of a network architecture of a communication system according to an embodiment of this application;
FIG. 4 is a schematic flowchart 1 of a communication method according to an embodiment of this application;
FIG. 5 is a schematic flowchart 2 of a communication method according to an embodiment of this application;
FIG. 6 is a diagram 1 of a scenario of a communication method according to an embodiment of this application;
FIG. 7 is a schematic flowchart 3 of a communication method according to an embodiment of this application;
FIG. 8 is a diagram 2 of a scenario of a communication method according to an embodiment of this application;
FIG. 9 is a schematic flowchart 4 of a communication method according to an embodiment of this application;
FIG. 10 is a diagram 3 of a scenario of a communication method according to an embodiment of this application;
FIG. 11 is a diagram of a structure of a first access network device according to an embodiment of this application;
FIG. 12 is a diagram of a structure of a second access network device according to an embodiment of this application;
FIG. 13 is a diagram of a structure of a first core network device according to an embodiment of this application;
FIG. 14 is a diagram of a structure of a second core network device according to an embodiment of this application;
FIG. 15 is a diagram of a structure of a communication apparatus according to an embodiment of this application;
FIG. 16 is a diagram of a structure of a device 1 according to an embodiment of this application;
FIG. 17 is a diagram of a structure of a device 2 according to an embodiment of this application;
FIG. 18 is a diagram of a structure of a device 3 according to an embodiment of this application;
FIG. 19 is a diagram of a structure of a system 300 according to an embodiment of this application; and
FIG. 20 is a diagram of a structure of a system 400 according to an embodiment of this application.

### DESCRIPTION OF EMBODIMENTS

To make a person skilled in the art understand the technical solutions in this application better, the following clearly and completely describes the technical solutions in embodiments of this application with reference to the accompanying drawings in embodiments of this application. It is clear that the described embodiments are merely some rather than all of embodiments of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first target object and a second target object are used to distinguish between different target objects, but are not used to describe a particular order of the target objects.

In embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word like "example" or "for example" is intended to present a related concept in a specific manner.

In descriptions of embodiments of this application, unless otherwise stated, "a plurality of" means two or more than two. For example, a plurality of processing units mean two or more processing units, and a plurality of systems mean two or more systems.

For ease of understanding, the following first explains and describes related nouns or terms used in embodiments of this application.

### 1. Communication (or referred to as a communication technology)

Communication is a technology in which a transmit end modulates information on a radio wave and sends the radio wave to a receive end, and the receive end demodulates a signal carried on the radio wave to obtain the information.

### 2. Sensing (or referred to as a sensing technology)

Sensing is a technology in which the transmit end sends a radio wave in a specific direction, a reflected radio wave is formed when the radio wave is irradiated to a surface of a target, and the receive end obtains information such as a position, a velocity, and a type of the target by receiving and processing the reflected radio wave.

### 3. Terminal device

The terminal device is configured to send an uplink signal to a network device, or receive a downlink signal from the network device. The terminal device includes a mobile phone, a tablet computer, a virtual reality terminal device, an augmented reality terminal device, a wireless terminal in industrial control, and the like.

### 4. Network device

The network device is configured to receive an uplink signal from the terminal device, or send a downlink signal to the terminal device. The network device may be a network device in LTE, a 5G new radio (New radio interface, NR) network device, a base station (NodeB), an evolved NodeB (eNodeB), a base station in a 5G mobile communication system, a next generation mobile communication base station (next generation NodeB, gNB), a base station in a future mobile communication system, an access node in a Wi-Fi system, or the like.

### 5. Core network device

The core network device is a device that is mainly responsible for maintaining subscription data of a mobile network, and provides session management, mobility management, policy management, security authentication, and other functions for the terminal device.

### 6. Sensing accuracy

The sensing accuracy is used to describe an error between a sensing result and a true result. For example, in distance sensing, a sensing amount obtained by using a sensing signal is a distance of 6 m between a target and a sensing device, but a true distance between the target and the sensing device is 5 m. In this case, the sensing error is 1 m, that is, the sensing accuracy is 1 m.

### 7. Sensing resolution

The sensing resolution is used to describe a minimum capability of sensing to distinguish between two different targets. For example, in distance sensing, distance resolution is 1 m, which is equivalent to that when a distance between two targets is greater than or equal to 1 m, a sensing device can distinguish between the two targets. When the distance between the two targets is less than 1 m, the sensing device cannot distinguish between the two targets.

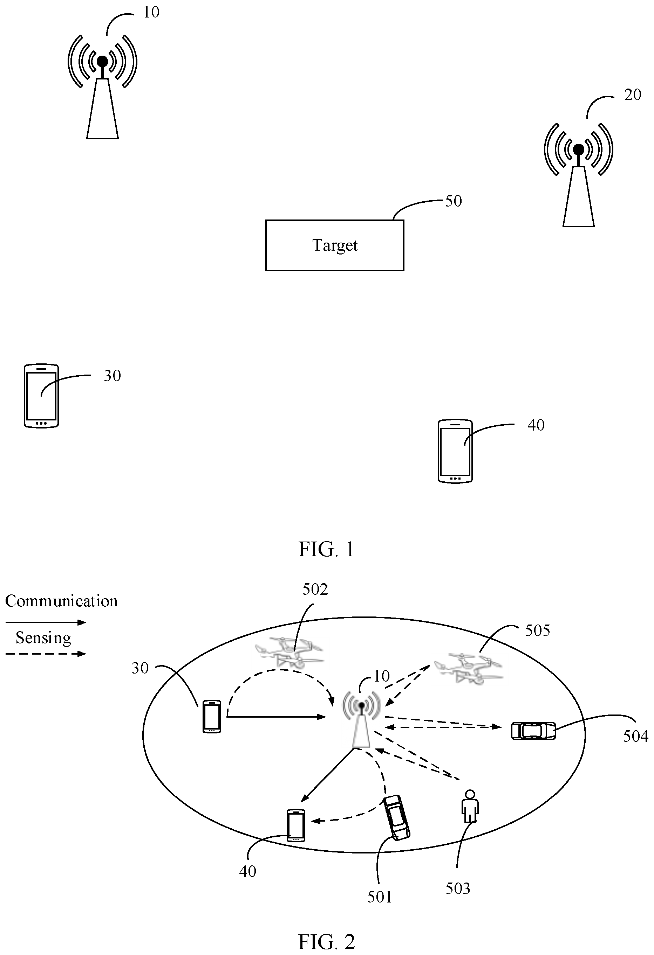

An integrated sensing and communication technology, which is obtained by integrating sensing and communication, can enhance a sensing capability on a mobile communication network, to transmit and construct sensing results such as detection, tracking, and imaging of a target by using the communication technology. Sensing includes monostatic sensing and bistatic sensing. Monostatic sensing means that a transmit end and a receive end of a sensing signal are a same network device. From a perspective of a sensing signal procedure, the network device is a sensing site. The sensing site needs to send a radio wave (which may also be referred to as a sensing signal), and also needs to receive a reflected radio wave (which may also be referred to as a reflected signal) obtained through reflection of the radio wave on a surface of a target. Therefore, monostatic sensing is also referred to as a self-sending and self-receiving mode. Bistatic sensing means that a transmit end and a receive end of a sensing signal are two different network devices. From a perspective of a sensing signal procedure, if a network device at the transmit end is referred to as a sensing site A, and a network device at the receive end is referred to as a sensing site B, after the sensing site A sends the sensing signal, the sensing site B receives a signal obtained through reflection of the signal on a surface of a target. Therefore, the bistatic sensing mode is also referred to as an A-sending and B-receiving mode. In embodiments of this application, the target includes an electromagnetic scatterer or an object. FIG. 1 is a diagram of a network architecture of a communication system according to an embodiment of this application. The communication system 100 includes a plurality of devices, which are respectively a first access network device like a first base station 10, a second access network device like a second base station 20, a first terminal device 30, a second terminal device 40, and a target 50. In the communication system 100, the first base station 10, the second base station 20, the first terminal device 30, and the second terminal device 40 can sense a target while performing communication. The first base station 10, the second base station 20, the first terminal device 30, and the second terminal device 40 can perform monostatic sensing or bistatic sensing, and are correspondingly configured based on an actual situation. Embodiments of this application are described by using a possible example, but are not limited thereto. Refer to FIG. 1. The target 50 may be an object or an electromagnetic scatterer. For example, the target 50 may be a device having a communication function, or may be another object that does not have a communication function. For example, the target 50 includes a vehicle, a low-altitude uncrewed aerial vehicle, a pedestrian, and another moving or static object. FIG. 2 is a diagram of a scenario of integrated sensing and communication according to an embodiment of this application. The scenario includes the first base station 10, the first terminal device 30, the second terminal device 40, and a target (the target in FIG. 2 includes a vehicle 501, a low-altitude uncrewed aerial vehicle 502, a pedestrian 503, a vehicle 504, and an uncrewed aerial vehicle 505). Sensing and communication in FIG. 1 are implemented in the scenario in FIG. 2. With reference to FIG. 1 and FIG. 2, for example, the first terminal device 30 sends a sensing signal, and after the sensing signal is reflected on the low-altitude uncrewed aerial vehicle 502, the first base station 10 receives a reflected signal, obtains a sensing amount of the low-altitude uncrewed aerial vehicle 502, and may correspondingly determine, based on the sensing amount of the low-altitude uncrewed aerial vehicle 502, a first tuple corresponding to the low-altitude uncrewed aerial vehicle 502. The first tuple includes at least one element, and the element represents the sensing amount of the low-altitude uncrewed aerial vehicle 502. For example, the element included in the first tuple may be at least one of a delay, a distance, an azimuth angle, a pitch angle, strength, a velocity, or a frequency offset. This is equivalent to that a device may obtain a sensing result of the low-altitude uncrewed aerial vehicle 502 based on each element in the first tuple corresponding to the low-altitude uncrewed aerial vehicle 502, to provide a sensing service, for example, obtain a moving velocity or a position of the low-altitude uncrewed aerial vehicle 502 to provide the sensing service. The first base station 10 sends a sensing signal, and after the sensing signal is reflected on the vehicle 501, the second terminal device 40 receives a reflected signal, and obtains each element in a first tuple corresponding to the vehicle 501, for example, obtains a moving velocity and a traveling trajectory of the vehicle 501. The two cases correspond to a bistatic sensing mode. The first base station 10 sends a sensing signal, and after the sensing signal is reflected on the pedestrian 503, the first base station 10 still receives a reflected signal, and obtains each element in a first tuple corresponding to the pedestrian 503, for example, a moving velocity and a position of the pedestrian 503. This case corresponds to a monostatic sensing mode. Similarly, for the vehicle 504 and the uncrewed aerial vehicle 505, the first base station 10 also obtains sensing amounts in the monostatic sensing mode. The scenario provided in FIG. 2 is an example. That the first base station 10 obtains the element in the first tuple corresponding to the target and the sensing result is the position, the moving velocity, and the like is also an example. This is not limited. A scenario to which an integrated sensing and communication technology may be applied may further include a plurality of base stations or another network device. This is not limited by the example in FIG. 2. In addition, different base stations and different terminal devices may sense a same target. For example, both the second terminal device 40 and the first base station 10 may send sensing signals to the vehicle 501, to obtain a tuple corresponding to the vehicle 501 and the like.

A sensing amount determined by each access network device includes at least one tuple, each tuple includes at least one element, and the element includes a delay, a distance, an azimuth angle, a pitch angle, strength, a velocity, or a frequency offset. One tuple corresponds to one target, and the target includes an electromagnetic scatterer or an object. For ease of differentiation, in this embodiment of this application, an example in which a tuple determined by the first base station is referred to as a first tuple and a tuple determined by the second base station is referred to as a second tuple is used for description.

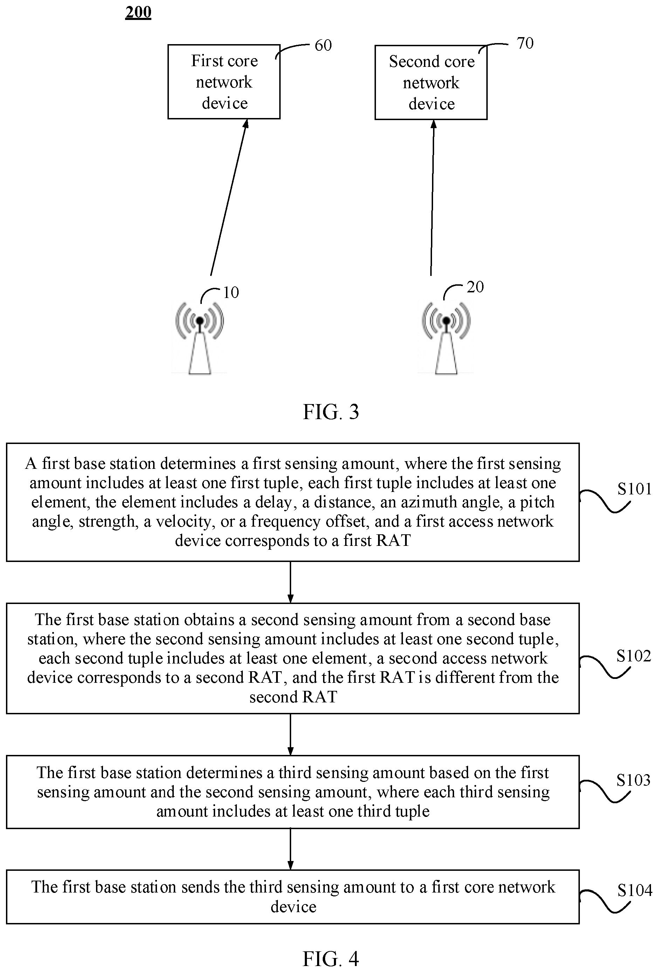

It is assumed that the second terminal device 40 accesses the base station 20. The first base station 10 senses each element in a first tuple corresponding to the vehicle 501. After sensing each element in the tuple corresponding to the vehicle 501, the second terminal device 40 reports the element to the second base station 20. The second base station 20 processes, as a second tuple of the second base station 20, the tuple sent by the second terminal device 40. In this scenario, although both the first base station 10 and the second base station 20 obtain the tuples corresponding to the vehicle 501, because sensing amounts cannot be exchanged between the first base station 10 and the second base station 20, calculation cannot be performed based on the tuples obtained by the two base stations, and a sensing amount that is formed by a tuple with higher sensing accuracy and higher sensing resolution cannot be obtained. This is equivalent to that sensing capabilities cannot be aggregated, and the sensing capabilities are limited. Further, if the first base station 10 and the second base station 20 access different core network devices through different RATs, because sensing amounts cannot be exchanged between the two core network devices, it is equivalent to that the sensing amounts cannot be exchanged between the different RATs. Consequently, sensing performance is damaged. To resolve this problem, embodiments of this application provide a communication method, to exchange sensing amounts between two RATs. FIG. 3 is a diagram of a network architecture of a communication system according to an embodiment of this application. The communication system 200 includes the first base station 10, the second base station 20, a first core network device 60, and a second core network device 70. Refer to FIG. 3. The first base station 10 accesses the first core network device 60 by using a first RAT, and the second base station 20 accesses the second core network device 70 by using a second RAT. The first RAT is one of LTE, 5G NR, 5G-A, and a 5G next generation technology (for example, 5.5G or 6G), the second RAT is one of LTE, 5G NR, 5G-A, and a 5G next generation technology (for example, 5.5G or 6G), and the first RAT is different from the second RAT. FIG. 3 is described by using an example in which the first base station 10 and the second base station 20 are respectively deployed at two sensing sites. Alternatively, the first base station 10 and the second base station 20 may be deployed at a same site.

FIG. 4 is a schematic flowchart 1 of the communication method according to an embodiment of this application. The method may be applied to the communication system 200 shown in FIG. 3 and performed by the first base station 10. As shown in FIG. 4, the method includes S101 to S104.

S101: The first base station determines a first sensing amount, where the first sensing amount includes at least one first tuple, each first tuple includes at least one element, the element includes a delay, a distance, an azimuth angle, a pitch angle, strength, a velocity, or a frequency offset, and a first access network device corresponds to a first RAT.

Optionally, the first base station may perform monostatic sensing, for example, the first base station receives a reflected signal of at least one target, and determines each first tuple corresponding to each target. Alternatively, the first base station may perform bistatic sensing, for example, receives at least one tuple sent by a terminal device, and determines the at least one tuple as a first tuple. The first base station may obtain the first sensing amount based on the at least one first tuple determined by the first base station; or the first base station may determine the first sensing amount based on the at least one first tuple sent by the terminal device; or the first base station may determine the first sensing amount based on a plurality of first tuples obtained by the first base station and the terminal device. In an example, the first base station determines the first sensing amount through summarization based on the plurality of first tuples obtained by the first base station and the terminal device.

In the scenario shown in FIG. 2, a method for determining the first sensing amount by the first base station is described as an example. The first sensing amount may include the element in the at least one first tuple (which may also be referred to as a sensing amount). Refer to the scenario in FIG. 2. Targets include the vehicle 501, the low-altitude uncrewed aerial vehicle 502, the pedestrian 503, the vehicle 504, and the uncrewed aerial vehicle 505. The first base station 10 can receive reflected signals of the targets, namely, the low-altitude uncrewed aerial vehicle 502, the pedestrian 503, the vehicle 504, and the uncrewed aerial vehicle 505, where each target corresponds to one first tuple. In addition, the first base station 10 obtain elements of the first tuples. The second terminal device 40 may receive a reflected signal of the target vehicle 501, where the target vehicle 501 corresponds to one first tuple. In addition, the second terminal device 40 obtains at least one element in the first tuple corresponding to the vehicle 501, and sends the first tuple (including the at least one element) corresponding to the vehicle 501 to the first base station 10. The first base station 10 obtains, by receiving the first tuple sent by the second terminal device 40, the at least one element in the first tuple corresponding to the vehicle 501.

For example, the element in each first tuple may be a delay, a distance, an azimuth angle, a pitch angle, strength, a velocity, or a frequency offset, that is, each first tuple includes at least one of the delay, the distance, the azimuth angle, the pitch angle, the strength, the velocity, or the frequency offset. In an example of actual sensing, the element may be one of the following content: relative time of arrival (Relative Time of Arrival, RTOA), namely, a delay relative to a time reference point, where the time reference point may be a moment at which a base station (which is the first base station in this example) sends a sensing signal; an A-angle of arrival (Angle-of-Arrival, AOA), namely, an azimuth angle of arrival of a reflected signal at the base station (which is the first base station 10 in this example); a Z-angle of arrival (Angle-of-Arrival, AOA), namely, a pitch angle of arrival of the reflected signal at the base station (which is the first base station 10 in this example); reference signal received power (Reference Signal Received Power, RSRP), namely, strength of the reflected signal at a scattering point; a radial velocity, namely, a velocity of the scattering point in a direction of a connection line between the scattering point and the base station (which is the first base station 10 in this example); and a radial velocity direction, namely, a direction of a velocity of the scattering point toward a network device (which includes the first base station 10 and the second terminal device 40 in this example) or away from the base station (which is the first base station 10 in this example).

With reference to the foregoing example, it is assumed that the first base station determines an A-AOA and a radial velocity of the low-altitude uncrewed aerial vehicle 502, a radial velocity of the pedestrian 503, RSRP and a radial velocity direction of the vehicle 504, and RSRP of the uncrewed aerial vehicle 505, and the first base station further receives a radial velocity direction and a radial velocity of the vehicle 501. The first sensing amount determined by the first base station is the radial velocity direction and the radial velocity of the vehicle 501, the A-AOA and the radial velocity of the low-altitude uncrewed aerial vehicle 502, the radial velocity of the pedestrian 503, and the RSRP and the radial velocity direction of the vehicle 504 of the vehicle 504. This example is used to describe a relationship between the first sensing amount, the first tuple, and the element. This is not limited.

S102: The first base station obtains a second sensing amount from a second base station, where the second sensing amount includes at least one second tuple, each second tuple includes at least one element, a second access network device corresponds to a second RAT, and the first RAT is different from the second RAT.

The second base station may determine the second sensing amount with reference to the method for determining the first sensing amount by the first base station. Details are not described again.

Optionally, the element in each second tuple may be a delay, a distance, an azimuth angle, a pitch angle, strength, a velocity, or a frequency offset, that is, each second tuple includes at least one of the delay, the distance, the azimuth angle, the pitch angle, the strength, the velocity, or the frequency offset. In an example of actual sensing, the element may be one of the following content: RTOA, namely, a delay relative to a time reference point, where the time reference point may be a moment at which a base station (which is the second base station 20 in this example) sends a sensing signal; an A-AOA, namely, an azimuth angle of arrival of a reflected signal at the base station (which is the second base station 20 in this example); a Z-AOA, namely, a pitch angle of arrival of the reflected signal at the base station (which is the second base station 20 in this example); RSRP, namely, strength of the reflected signal at a scattering point; a radial velocity, namely, a velocity of the scattering point in a direction of a connection line between the scattering point and the base station (which is the second base station 20 in this example); and a radial velocity direction, namely, a direction of a velocity of the scattering point toward a network device (which includes the second base station 20 and a terminal device that accesses the second base station in this example) or away from the base station (which is the second base station 20 in this example).

Optionally, the target corresponding to the first tuple may be the same as or different from a target corresponding to the second tuple. For example, the target corresponding to the first tuple and the target corresponding to the second tuple are a same object. For example, both a target corresponding to a first tuple and a target corresponding to a second tuple are the pedestrian 503 shown in FIG. 2. If the pedestrian 503 is at a position that is repeatedly covered by a serving cell of the first base station and a serving cell of the second base station, when the second base station senses the target corresponding to the second tuple, the second base station also uses the pedestrian 503 as the target to obtain the second tuple. In other words, the pedestrian 503 corresponds to both a first tuple of the first base station and a second tuple of the second base station. An element in the first tuple corresponding to the pedestrian 503 may be the same as or different from an element in the second tuple corresponding to the pedestrian 503. Optionally, if the element in the first tuple corresponding to the pedestrian 503 is the same as the element in the second tuple corresponding to the pedestrian 503, after the first sensing amount and the second sensing amount are exchanged, the first base station may obtain a more accurate sensing result.

S103: The first base station determines a third sensing amount based on the first sensing amount and the second sensing amount, where each third sensing amount includes at least one third tuple.

Optionally, that the first base station may obtain, based on the first sensing amount and the second sensing amount, the third sensing amount by using a pre-stored sensing amount obtaining method may include: the sensing amount obtaining method includes: a calculation method for obtaining the third tuple by performing averaging on the first tuple and the second tuple based on a correspondence between the first tuple and the target and a correspondence between the second tuple and the target. For example, if there are a first tuple and a second tuple that correspond to a same target, for example, a target M, an average value of an element in the first tuple and an element in the second tuple is calculated, to obtain an element in a third tuple corresponding to the target M. For example, in the first sensing amount determined by the first base station, if a first tuple corresponding to a target, namely, the pedestrian 503, is a first tuple 1, a radial velocity of the first tuple 1 is A, and a radial velocity direction of the first tuple 1 is B, a first tuple corresponding to a target, namely, the uncrewed aerial vehicle 505, is a first tuple 2, and an A-AOA of the first tuple 2 is C. In the second sensing amount obtained by the first base station, if a second tuple corresponding to a target, namely, the pedestrian 503, is a second tuple 1, and a radial velocity of the second tuple 1 is D, the first base station may obtain E by calculating an average value of A and D, and the first base station may determine, by using the pre-stored sensing amount obtaining method, that a third tuple corresponding to the target, namely, the pedestrian 503, is a third tuple 1, where a radial velocity of the third tuple 1 is E, a radial velocity direction of the third tuple 1 is B, a third tuple corresponding to the target uncrewed aerial vehicle 505 is a third tuple 2, and an A-AOA of the third tuple 2 is C.

The pre-stored sensing amount obtaining method may be implemented by using a plurality of methods. In addition to calculating the average value shown in the foregoing example, the method may further include obtaining each third tuple in the third sensing amount by weighting an element or a tuple, or the like. Details are not described herein.

S104: The first base station sends the third sensing amount to a first core network device.

The first core network device receives the third sensing amount, and may determine the first sensing amount and the second sensing amount based on the third sensing amount. In addition, in devices that perform communication, a same sensing amount obtaining method may be agreed on. For example, the sensing amount obtaining method includes: a calculation method for obtaining the third tuple by performing averaging on the first tuple and the second tuple based on the correspondence between the first tuple and the target and the correspondence between the second tuple and the target.

The first base station sends the third sensing amount to the first core network device. After receiving the third sensing amount, the first core network device also obtains the first sensing amount and the second sensing amount by using the same pre-stored sensing amount obtaining method. For example, the third tuple corresponding to the target, namely, the pedestrian 503, is the third tuple 1, the radial velocity of the third tuple 1 in the third sensing amount is E, and the radial velocity direction of the third tuple 1 in the third sensing amount is B. The third tuple corresponding to the target uncrewed aerial vehicle 505 is the third tuple 2, and the A-AOA of the third tuple 2 is C. The first core network device may first determine, by using the pre-stored sensing amount obtaining method, that the first sensing amount includes the first tuple 1 and the first tuple 2, and that the second sensing amount includes the second tuple 1. Because the specific radial velocities of the first tuple 1 and the second tuple 1 cannot be determined, the radial velocity E may be assigned to the radial velocities of the first tuple 1 and the second tuple 1, which is equivalent to optimizing data. Because only the first tuple includes a radial velocity direction of an element, it may be determined, based on the radial velocity E and the radial velocity direction B of the third tuple 1, that the radial velocity of the first tuple 1 is E, the radial velocity direction of the first tuple 1 is B, and that the radial velocity of the second tuple 1 is E. In addition, because only the first tuple 2 includes the A-AOA, it is determined that the A-AOA of the first tuple 2 is C. The first sensing amount and the second sensing amount are further obtained. The first sensing amount includes the first tuple 1 and the first tuple 2, where the radial velocity of the first tuple 1 is E, the radial velocity direction of the first tuple 1 is B, and the A-AOA of the first tuple 2 is C. The second sensing amount includes the second tuple 1, where the radial velocity of the second tuple 1 is E.

Further, the first core network device may obtain the element in each first tuple from the obtained first sensing amount based on a requirement for a sensing service. For example, the requirement for the sensing service is to obtain a velocity of each target. Therefore, the first core network device may obtain the sensing result based on an element that is in elements of each third tuple in the third sensing amount and that is related to the velocity. The sensing result may include a position, a velocity, a type, and the like of the target.

Optionally, the first core network device may further send the obtained second sensing amount to a second core network device.

According to the communication method provided in this embodiment of this application, sensing amounts can be exchanged between network devices, and sensing capabilities can be aggregated. In this sensing reporting method, after a sensing amount is reported to a core network device, a more accurate sensing result can be obtained based on a requirement for a sensing service of the core network device and more sensing amounts, to improve sensing accuracy of an entire communication network, that is, provide a higher sensing capability.

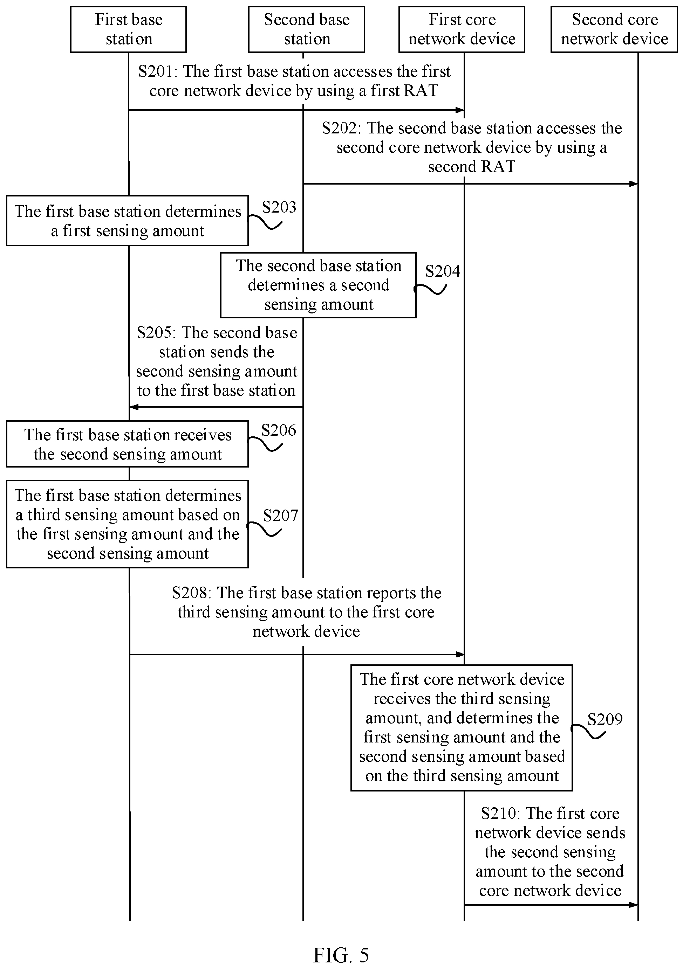

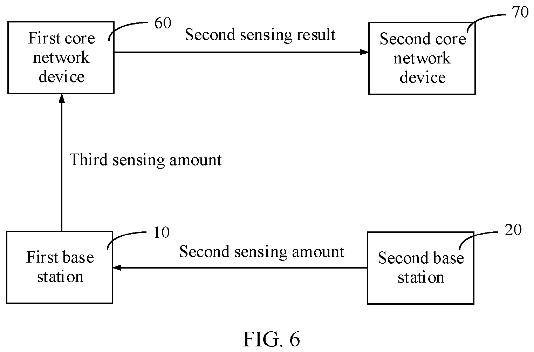

FIG. 5 is a schematic flowchart 2 of the communication method according to an embodiment of this application. FIG. 6 is a diagram 1 of a scenario of the communication method according to an embodiment of this application. With reference to FIG. 5 and FIG. 6, the method may be applied to a network device, for example, an access network device and a core network device. The access network device includes a first base station and a second base station. The core network device includes a first core network device and a second core network device. The method includes S201 to S210.

S201: The first base station accesses the first core network device by using a first RAT.

S202: The second base station accesses the second core network device by using a second RAT.

The first RAT is any one of LTE, 5G NR, 5G-A, and a 5G next generation technology (for example, 5.5G or 6G), and the second RAT is any one of LTE, 5G NR, 5G-A, and a 5G next generation technology (for example, 5.5G or 6G). The first RAT and the second RAT are two different radio access technologies.

In an LTE system, a terminal device supports simultaneous access to two network devices (for example, the first base station and the second base station provided in embodiments of this application). This access mode is referred to as dual connectivity (Dual Connectivity, DC). One network device is a primary network device, and the other network device is a secondary network device. In a development and evolution process of a wireless communication system, an operator deploys both a 5G NR system and an LTE system, and the terminal device supports simultaneous access to an LTE network device and an NR network device. Because LTE is also referred to as evolved universal terrestrial radio access (Evolved Universal Terrestrial Radio Access, E-UTRA), this access mode is referred to as evolved universal terrestrial radio access new radio dual connectivity (E-UTRA NR Dual Connectivity, EN-DC). In the EN-DC mode, the LTE network device is a primary network device, and the NR network device is a secondary network device. With evolution of the system, a connection mode may also include that the NR network device is the primary network device, the LTE network device is the secondary network device, or the like, or the terminal device can simultaneously access a 5G system and a next generation 5G system. In this embodiment of this application, an example in which the terminal device 30 or the terminal device 40 shown in FIG. 1 is connected to both a network device (namely, a first access network device) of the first RAT and a network device (namely, a second access network device) of the second RAT in a first RAT and second RAT dual connectivity mode, the first base station 10 is connected to the first core network device, and the second base station 20 is connected to the second core network device is used for description. The network device of the first RAT may be the first base station 10, and the network device of the second RAT may be the second base station 20.

Optionally, the first base station 10 and the second base station 20 may be deployed at different sites, or the first base station 10 and the second base station 20 may be deployed at a same site, and share a same set of hardware devices, or use different hardware devices.

There is no sequence relationship between S201 and S202. S203 is performed after S201, and S207 is performed after S202.

S203: The first base station determines a first sensing amount.

Optionally, the first sensing amount includes at least one first tuple, where each first tuple includes at least one element, and the element is a delay, a distance, an azimuth angle, a pitch angle, strength, a velocity, or a frequency offset. For example, an element in a first tuple includes at least one of an RTOA, an A-AOA, a Z-AOA, RSRP, a radial velocity, and a radial velocity direction.

S207 is performed after S203.

S204: The second base station determines a second sensing amount.

Optionally, the first sensing amount includes at least one second tuple, where each second tuple includes at least one element, and the element is a delay, a distance, an azimuth angle, a pitch angle, strength, a velocity, or a frequency offset. For example, an element in a second tuple includes at least one of an RTOA, an A-AOA, a Z-AOA, RSRP, a radial velocity, and a radial velocity direction.

S205: The second base station sends the second sensing amount to the first base station.

S206: The first base station receives the second sensing amount.

S207: The first base station determines a third sensing amount based on the first sensing amount and the second sensing amount.

For a method for determining the third sensing amount, refer to the example in S103. Details are not described herein again.

S208: The first base station reports the third sensing amount to the first core network device.

S209: The first core network device receives the third sensing amount, and determines the first sensing amount and the second sensing amount based on the third sensing amount.

For a method for obtaining the first sensing amount and the second sensing amount by using the third sensing amount, refer to the example in S104. Details are not described herein again.

S210: The first core network device sends the second sensing amount to the second core network device.

Optionally, the first core network device may separately store requirements for sensing services of the first core network device and the second core network device in advance. After obtaining the second sensing amount, the first core network device may send, to the second core network device based on the requirement for the sensing service of the second core network device, a second tuple that meets the requirement for the sensing service of the second core network device or an element included in the second tuple, to provide the sensing service. Alternatively, the first core network device sends the obtained second sensing amount to the second core network device, and the second core network device determines, based on the requirement for the sensing service of the second core network device and the second sensing amount, a required second tuple or an element included in the second tuple, to provide the sensing service. Alternatively, the first core network device may further send the third sensing amount to the second core network device, and the second core network device obtains the second sensing amount by referring to the example in which the first core network device obtains the first sensing amount and the second sensing amount in S104.

Optionally, the first core network device and the second core network device may have different requirements for the sensing services, and therefore have different requirements for obtained sensing results.

According to the communication method provided in this embodiment of this application, two different RATs are no longer used to separately report respective sensing amounts to respective core network devices, and then the two core network devices separately provide sensing services by using the respective sensing amounts. Instead, the base stations exchange sensing amounts to aggregate the sensing amounts. In addition, the two core network devices may also send the sensing amounts to each other to provide the sensing services, so that sensing capabilities of the devices of the two different RATs are aggregated, more accurate sensing amounts are provided, and performance of the sensing services is improved.

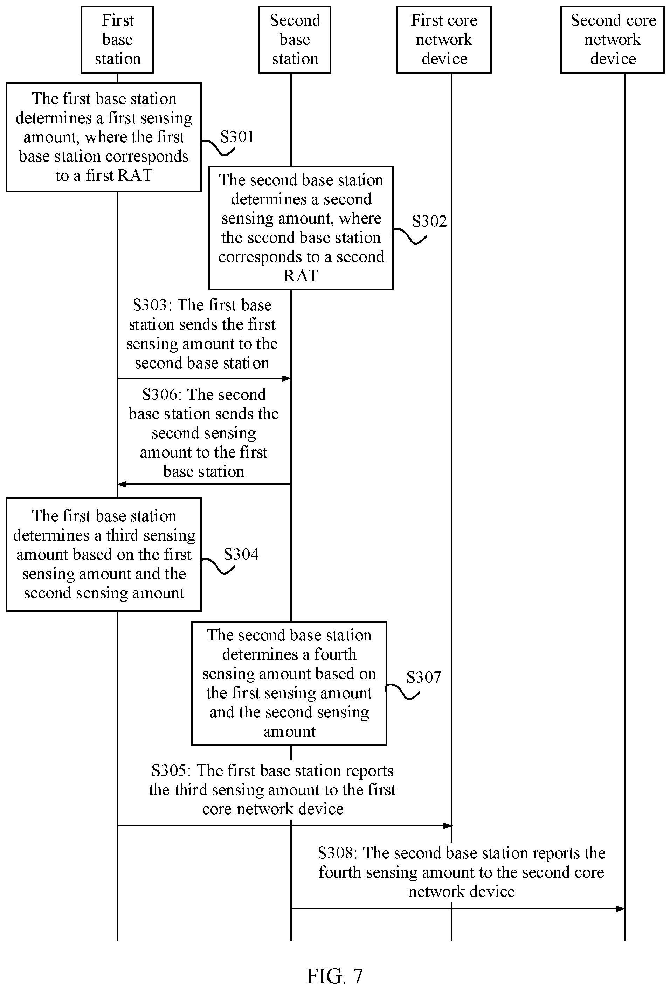

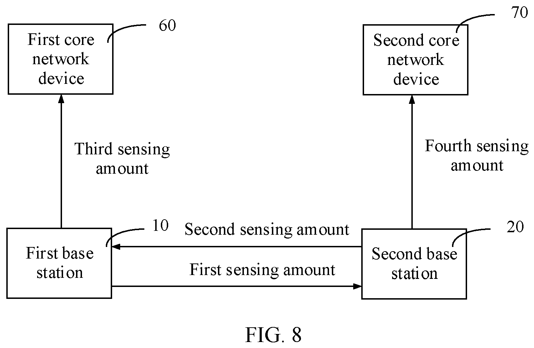

FIG. 7 is a schematic flowchart 3 of the communication method according to an embodiment of this application. FIG. 8 is a diagram 2 of a scenario of the communication method according to an embodiment of this application. With reference to FIG. 7 and FIG. 8, the method may be applied to a network device, for example, an access network device and a core network device. The access network device includes a first base station and a second base station. The core network device includes a first core network device and a second core network device. The method includes S301 to S308.

S301: The first base station determines a first sensing amount, where the first base station corresponds to a first RAT.

S302: The second base station determines a second sensing amount, where the second base station corresponds to a second RAT.

There is no sequence relationship between S301 and S302. S303 is performed after S301, and S306 is performed after S302.

S303: The first base station sends the first sensing amount to the second base station.

S304: The first base station determines a third sensing amount based on the first sensing amount and the second sensing amount.

This step is performed after S306. For a method for determining the third sensing amount, refer to the example in S103. Details are not described herein again.

S305: The first base station reports the third sensing amount to the first core network device.

Optionally, the first core network device receives the third sensing amount, and determines the first sensing amount and the second sensing amount based on the third sensing amount. For details, refer to the example in S104. Details are not described herein again.

S306: The second base station sends the second sensing amount to the first base station.

S307: The second base station determines a fourth sensing amount based on the first sensing amount and the second sensing amount.

For a method for determining the fourth sensing amount, refer to the method for determining the third sensing amount in S103. Details are not described herein again. It should be noted that the fourth sensing amount may be the same as or different from the third sensing amount. For example, the third sensing amount and the fourth sensing amount that are different are obtained based on the first sensing amount and the second sensing amount by using different pre-stored calculation manners.

Further, if the second core network device and the first core network device provide different requirements for sensing services, and the first base station and the second base station pre-store different calculation manners, the third sensing amount and the fourth sensing amount that are different are obtained based on the first sensing amount and the second sensing amount. For example, the first core network device needs to obtain only a position of a target. When obtaining the third sensing amount, the first base station calculates the third sensing amount based on an element related to the position in each tuple. If the second core network device needs to obtain the position and a velocity of the target, when obtaining the fourth sensing amount, the second base station calculates the fourth sensing amount based on an element related to the position and the velocity in each tuple.

S308: The second base station reports the fourth sensing amount to the second core network device.

Optionally, the second core network device receives the fourth sensing amount, and determines a second sensing result based on the fourth sensing amount. For a method for obtaining the sensing result by using the sensing amount, refer to the example in S104. Details are not described herein again.

In this embodiment of this application, as shown in FIG. 8, the first base station 10 and the second base station 20 exchange sensing amounts, each base station can obtain the first sensing amount and the second sensing amount, then the first base station reports the third sensing amount obtained based on the two sensing amounts to the first core network device 60, and the second base station reports the fourth sensing amount obtained based on the two sensing amounts to the second core network device 70. In this way, a manner of transmitting a sensing amount is more flexible. If one base station is faulty, another base station can still aggregate sensing capabilities, and provide a more accurate sensing service for a core network device.

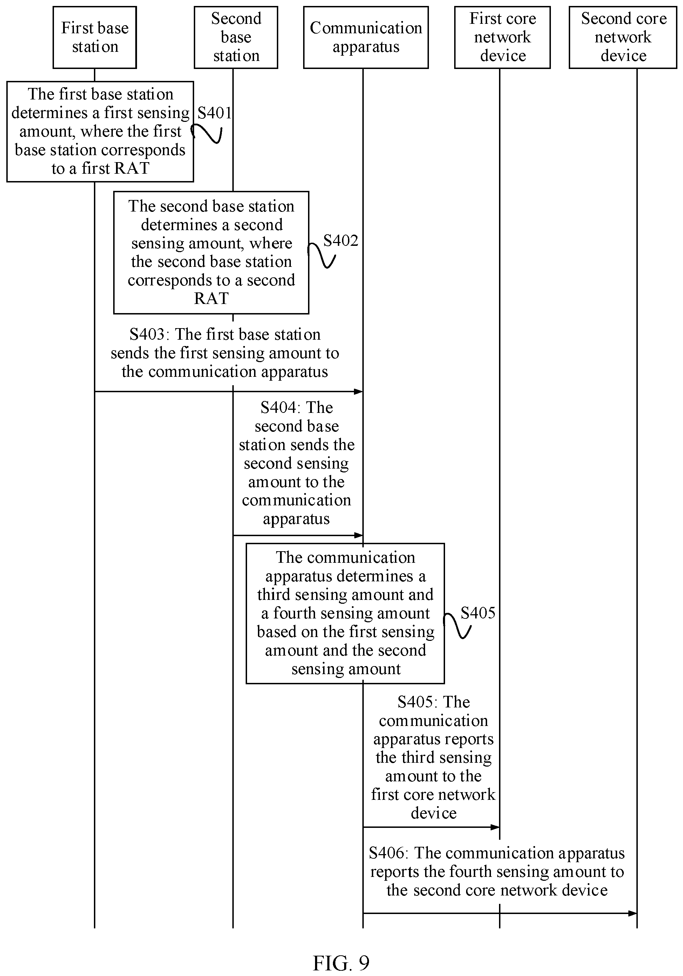

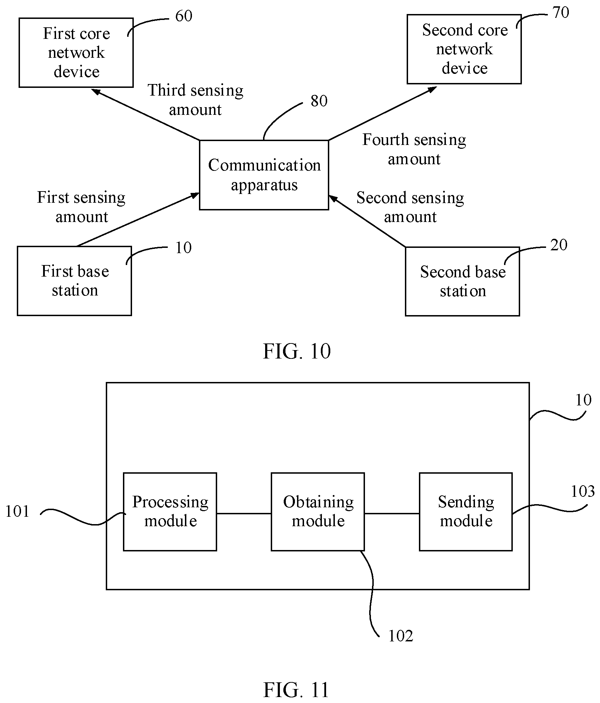

FIG. 9 is a schematic flowchart 4 of the communication method according to an embodiment of this application. FIG. 10 is a diagram 3 of a scenario of the communication method according to an embodiment of this application. With reference to FIG. 9 and FIG. 10, the method may be applied to a network device and a communication apparatus. The network device includes an access network device and a core network device. The access network device includes a first base station and a second base station. The core network device includes a first core network device and a second core network device. The method includes S401 to S406.

S401: The first base station determines a first sensing amount, where the first base station corresponds to a first RAT.

S402: The second base station determines a second sensing amount, where the second base station corresponds to a second RAT.

There is no sequence relationship between S401 and S402. S403 is performed after S401, and S404 is performed after S402.

S403: The first base station sends the first sensing amount to the communication apparatus.

The communication apparatus may be a network element. In actual use, the communication apparatus may be deployed in a device, deployed as an independent apparatus, or deployed in a communication system in another possible form, and includes a transceiver function and a processing function.

S404: The second base station sends the second sensing amount to the communication apparatus.

S405: The communication apparatus determines a third sensing amount and a fourth sensing amount based on the first sensing amount and the second sensing amount.

For a method for determining the third sensing amount and a method for determining the fourth sensing amount, refer to the example in S103. Details are not described herein again.

Optionally, the communication apparatus may pre-store a requirement for a sensing service of the first core network device and a requirement for a sensing service of the second core network device. The third sensing amount is obtained based on the requirement for the sensing service of the first core network device, and the fourth sensing amount is obtained based on the requirement for the sensing service of the second core network device. If requirements for sensing services provided by the second core network device and the first core network device are different, the obtained third sensing amount may be different from the obtained fourth sensing amount. If requirements for sensing services provided by the second core network device and the first core network device are the same, and calculation manners pre-stored in the communication apparatus for the first core network device and the second core network device are the same, the third sensing amount and the fourth sensing amount that are the same may also be obtained based on the first sensing amount and the second sensing amount. This embodiment of this application does not limit whether tuples in the third sensing amount and the fourth sensing amount are the same, or whether elements in the tuples are the same.

S405: The communication apparatus reports the third sensing amount to the first core network device.

S406: The communication apparatus reports the fourth sensing amount to the second core network device.

In this embodiment of this application, a network element used to jointly process sensing amounts reported by using different RATs, namely, the communication apparatus, is added. As shown in FIG. 10, the first base station 10 and the second base station 20 exchange sensing amounts with the first core network device 60 and the second core network device 70 through the communication apparatus 80. The communication apparatus 80 may be a network element in a communication network, for example, may be independent, or may be integrated into another device. In this way, there is no need to add a new function to a base station. The first base station 10 needs to send, to the communication apparatus 80, only the first sensing amount sent to the first core network device, and the second base station 20 also sends, to the communication apparatus 80, the second sensing amount sent to the second core network device. The communication apparatus 80 can be flexibly deployed based on a requirement of an actual scenario, so that sensing capabilities of two different RATs can be more flexibly aggregated, and sensing performance can be improved. In addition, functions of the existing network device and the existing core network device do not need to be added, and costs of the network device and the core network device are not increased.

FIG. 11 is a diagram of a structure of a first access network device according to an embodiment of this application. As shown in FIG. 11, the first access network device, for example, the first base station 10, includes a processing module 101, an obtaining module 102, and a sending module 103.

The processing module 101 is configured to determine a first sensing amount, where the first sensing amount includes at least one first tuple, the first tuple includes at least one element, the element includes a delay, a distance, an azimuth angle, a pitch angle, strength, a velocity, or a frequency offset, and the first access network device corresponds to a first RAT.

The obtaining module 102 is configured to obtain a second sensing amount from a second access network device, where the second sensing amount includes at least one second tuple, the second tuple includes at least one element, the second access network device corresponds to a second RAT, and the second RAT is different from the second RAT.

The processing module 101 is further configured to determine a third sensing amount based on the first sensing amount and the second sensing amount, where the third sensing amount includes at least one third tuple, and the third tuple includes at least one element.

The sending module 103 is configured to send the third sensing amount to a first core network device.

In a possible implementation, the sending module 103 is further configured to send the first sensing amount to the second access network device.

In a possible implementation, the first RAT is one of LTE, 5G NR, 5G-A, and a next generation 5G technology (for example, 5.5G or 6G), the second RAT is one of LTE, 5G NR, 5G-A, and a next generation 5G technology (for example, 5.5G or 6G), and the first RAT is different from the second RAT.

For example, the first RAT is 5G or 5G-A, and the second RAT is 6G or LTE.

In a possible implementation, one tuple corresponds to one target, the target includes an electromagnetic scatterer or an object, and the tuple includes the first tuple, the second tuple, and the third tuple.

It should be understood that the modules shown in FIG. 11 are merely examples. With reference to the method parts in embodiments of this application, the processing module 101, the obtaining module 102, and the sending module 103 may perform operations thereof or perform variations of the operations thereof.

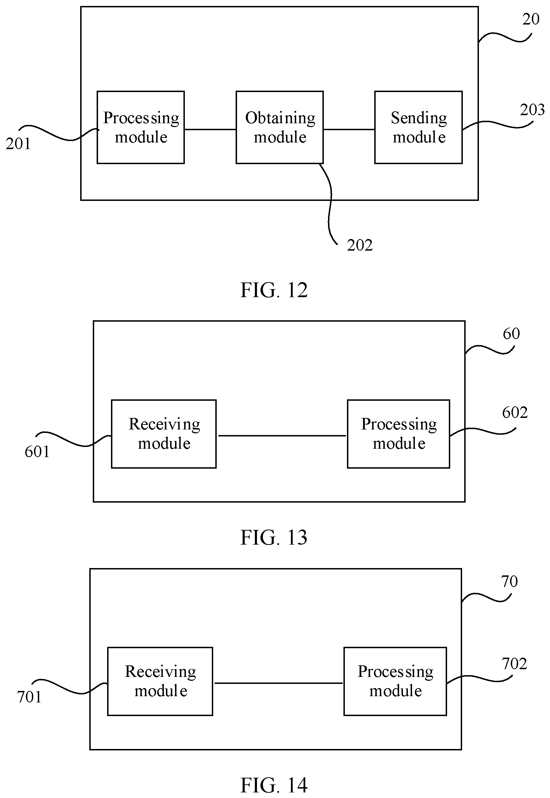

FIG. 12 is a diagram of a structure of a second access network device according to an embodiment of this application. As shown in FIG. 12, the second access network device, for example, the second base station 20, includes a processing module 201, an obtaining module 202, and a sending module 203.

The processing module 201 is configured to determine a second sensing amount, where the second sensing amount includes at least one second tuple, each second tuple includes at least one element, and the second access network device corresponds to a second RAT.

The obtaining module 202 is configured to obtain a first sensing amount from the first access network device, where the first sensing amount includes at least one first tuple, each first tuple includes at least one element, the element includes a delay, a distance, an azimuth angle, a pitch angle, strength, a velocity, or a frequency offset, a first access network device corresponds to a first RAT, and the first RAT is different from the second RAT.

The processing module 201 is further configured to determine a fourth sensing amount based on the first sensing amount and the second sensing amount, where the fourth sensing amount includes at least one fourth tuple, and each fourth tuple includes at least one element.

The sending module 203 is configured to send the fourth sensing amount to a second core network device.

In a possible implementation, the sending module 203 is further configured to send the second sensing amount to the first access network device.

In a possible implementation, the first RAT is one of LTE, 5G NR, 5G-A, and a next generation 5G technology (for example, 5.5G or 6G), the second RAT is one of LTE, 5G NR, 5G-A, and a next generation 5G technology (for example, 5.5G or 6G), and the first RAT is different from the second RAT.

For example, the first RAT is 5G or 5G-A, and the second RAT is 6G or LTE.

In a possible implementation, one tuple corresponds to one target, the target includes an electromagnetic scatterer or an object, and the tuple includes the first tuple, the second tuple, and the fourth tuple.

It should be understood that the modules shown in FIG. 12 are merely examples. With reference to the method parts in embodiments of this application, the processing module 201, the obtaining module 202, and the sending module 203 may perform operations thereof or perform variations of the operations thereof.

FIG. 13 is a diagram of a structure of a first core network device according to an embodiment of this application. As shown in FIG. 13, the first core network device 60 includes a receiving module 601 and a processing module 602.

The receiving module 601 is configured to receive a third sensing amount.

The processing module 602 is configured to provide a sensing service based on the third sensing amount, where the third sensing amount is sent by a first base station, or the third sensing amount is sent by a communication apparatus. The third sensing amount includes at least one third tuple, each third tuple is obtained based on a first tuple and a second tuple, the third tuple includes at least one element, the element includes a delay, a distance, an azimuth angle, a pitch angle, strength, a velocity, or a frequency offset, the first tuple is a tuple of a first sensing amount, the second tuple is a tuple of a second sensing amount, and the first core network device corresponds to a first RAT.

In a possible implementation, the first RAT is one of LTE, 5G NR, 5G-A, and a next generation 5G technology (for example, 5.5G or 6G), the second RAT is one of LTE, 5G NR, 5G-A, and a next generation 5G technology (for example, 5.5G or 6G), and the first RAT is different from the second RAT.

For example, the first RAT is 5G or 5G-A, and the second RAT is 6G or LTE.

In a possible implementation, one tuple corresponds to one target, the target includes an electromagnetic scatterer or an object, and the tuple includes the first tuple, the second tuple, and the third tuple.

It should be understood that the modules shown in FIG. 13 are merely examples. With reference to the method parts in embodiments of this application, the receiving module 601 and the processing module 602 may perform operations thereof or perform variations of the operations thereof.

FIG. 14 is a diagram of a structure of a second core network device according to an embodiment of this application. As shown in FIG. 14, the second core network device 70 includes a receiving module 701 and a processing module 702.

The receiving module 701 is configured to receive a fourth sensing amount.

The processing module 702 is configured to provide a sensing service based on the fourth sensing amount, where the fourth sensing amount is sent by a second base station, or the fourth sensing amount is sent by a communication apparatus. The fourth sensing amount includes at least one fourth tuple, each fourth tuple is obtained based on a first tuple and a second tuple, the fourth tuple includes at least one element, the element includes a delay, a distance, an azimuth angle, a pitch angle, strength, a velocity, or a frequency offset, the first tuple is a tuple of a first sensing amount, the second tuple is a tuple of a second sensing amount, and a first core network device corresponds to a second RAT.

In a possible implementation, the first RAT is one of LTE, 5G NR, 5G-A, and a next generation 5G technology (for example, 5.5G or 6G), the second RAT is one of LTE, 5G NR, 5G-A, and a next generation 5G technology (for example, 5.5G or 6G), and the first RAT is different from the second RAT.

For example, the first RAT is 5G or 5G-A, and the second RAT is 6G or LTE.

In a possible implementation, one tuple corresponds to one target, the target includes an electromagnetic scatterer or an object, and the tuple includes the first tuple, the second tuple, and the fourth tuple.

It should be understood that the modules shown in FIG. 14 are merely examples. With reference to the method parts in embodiments of this application, the receiving module 701 and the processing module 702 may perform operations thereof or perform variations of the operations thereof.

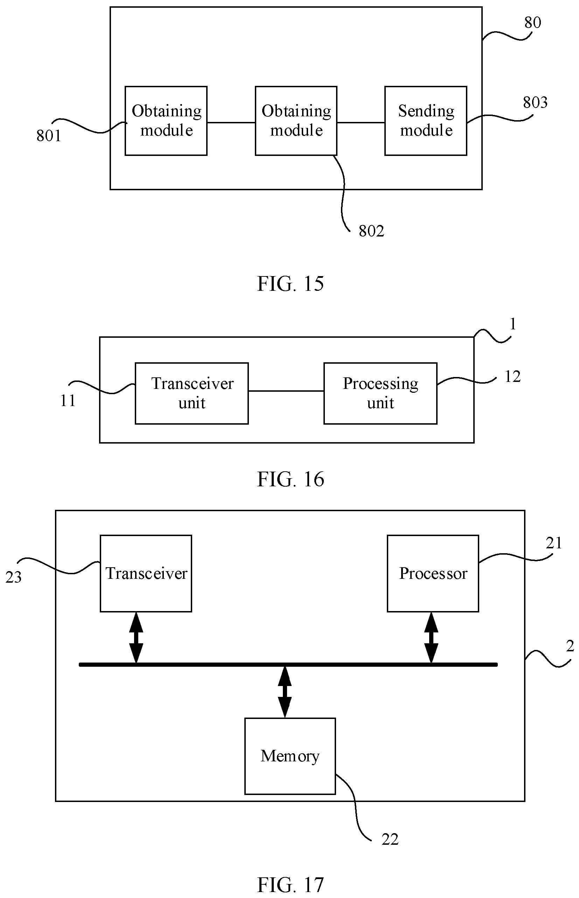

FIG. 15 is a diagram of a structure of a communication apparatus according to an embodiment of this application. As shown in FIG. 15, the communication apparatus 80 includes an obtaining module 801, a processing module 802, and a sending module 803.

The obtaining module 801 is configured to obtain a first sensing amount from a first access network device, where the first sensing amount includes at least one first tuple, the first tuple includes at least one element, the element includes a delay, a distance, an azimuth angle, a pitch angle, strength, a velocity, or a frequency offset, and the first access network device corresponds to a first RAT. The obtaining module is further configured to obtain a second sensing amount from a second access network device, where the second sensing amount includes at least one second tuple, the second tuple includes at least one element, the second access network device corresponds to a second RAT, and the second RAT is different from the second RAT.

The processing module 802 is configured to determine a third sensing amount based on the first sensing amount and the second sensing amount, where the third sensing amount includes at least one third tuple, and the third tuple includes at least one element.

The sending module 803 is configured to send the third sensing amount to a first core network device.

In a possible implementation, the processing module 802 is further configured to determine a fourth sensing amount based on the first sensing amount and the second sensing amount, where the fourth sensing amount includes at least one fourth tuple, and the fourth tuple includes at least one element. The sending module 803 is further configured to send the fourth sensing amount to a second core network device.

In a possible implementation, the first RAT is one of LTE, 5G NR, 5G-A, and a next generation 5G technology (for example, 5.5G or 6G), the second RAT is one of LTE, 5G NR, 5G-A, and a next generation 5G technology (for example, 5.5G or 6G), and the first RAT is different from the second RAT.

For example, the first RAT is 5G or 5G-A, and the second RAT is 6G or LTE.

In a possible implementation, one tuple corresponds to one target, the target includes an electromagnetic scatterer or an object, and the tuple includes the first tuple, the second tuple, the third tuple, and the fourth tuple.

It should be understood that the modules shown in FIG. 15 are merely examples. With reference to the method parts in embodiments of this application, the obtaining module 801, the processing module 802, and the sending module 803 may perform operations thereof or perform variations of the operations thereof.

In addition, FIG. 16 is a diagram of a structure of a device 1 according to an embodiment of this application. The device 1 shown in FIG. 16 includes a transceiver unit 11 and a processing unit 12. The device 1 may be configured to perform the method S101 to S104, S201 to S210, S301 to S308, or S401 to S406 in the foregoing embodiments. When the device 1 is configured to perform S101 to S104, S201 to S210, S301 to S308, or S401 to S406 in the foregoing embodiments, the device 1 is equivalent to the first access network device like the first base station 10, the second access network device like the second base station 20, the first core network device 60, the second core network device 70, or the communication apparatus 80, in the method.

It should be noted that, in embodiments of this application, division into the units is an example, and is merely a logical function division. In actual implementation, another division manner may be used. Functional units in embodiments of this application may be integrated into one processing unit, or each of the units may exist alone physically, or two or more units are integrated into one unit. For example, in the foregoing embodiment, the transceiver unit 11 and the processing unit 12 included in the device 1 may be a same unit, or may be different units. The transceiver unit 11 and the processing unit 12 included in the device 1 may be a same unit, or may be different units. The integrated unit may be implemented in the form of hardware, for example, a chip, or may be implemented in a form of a software functional unit.

In addition, an embodiment of this application further provides a device 2. FIG. 17 is a diagram of a structure of the device 2 according to an embodiment of this application. The device 2 may include a processor 21, a memory 22 coupled to the processor 21, and a transceiver 23. The transceiver 23 may be a communication interface, an optical module, or the like, and is configured to receive a packet, data information, or the like. The processor 21 may be a central processing unit (Central Processing Unit, CPU), a network processor (Network Processor, NP), or a combination of a CPU and an NP, and is configured to perform steps related to forwarding processing in the device described in the examples in the foregoing embodiments. The processor may alternatively be an application-specific integrated circuit (Application-Specific Integrated Circuit, ASIC), a programmable logic device (Programmable Logic Device, PLD), or a combination thereof. The PLD may be a complex programmable logic device (Complex Programmable Logic Device, CPLD), a field-programmable gate array (Field-Programmable Gate Array, FPGA), generic array logic (Generic Array Logic, GAL), or any combination thereof. The processor 21 may be one processor, or may include a plurality of processors. The memory 22 may include a volatile memory (volatile memory), for example, a random-access memory (Random-Access Memory, RAM). The memory may also include a non-volatile memory (non-volatile memory), for example, a read-only memory (Read-Only Memory, ROM), a flash memory (flash memory), a hard disk drive (Hard Disk Drive, HDD), or a solid-state drive (Solid-State Drive, SSD). The memory 22 may further include a combination of the foregoing types of memories. The memory 22 may be one memory, or may include a plurality of memories, and is configured to store program instructions. In an implementation, the memory 22 stores computer-readable instructions, and the computer-readable instructions include a plurality of software modules, for example, a sending module, a radio resource control module, and a receiving module. After executing each software module, the processor 21 may perform a corresponding operation based on an indication of each software module. In this embodiment, an operation performed by a software module is actually an operation performed by the processor 21 based on the indication of the software module. Optionally, the processor 21 may also store program code or instructions for performing the solutions in embodiments of this application. In this case, the processor 21 does not need to read the program code or the instructions from the memory 22.

The device 2 may be configured to perform the methods in the foregoing embodiments. Specifically, the device 2 may be used as a first access network device to perform operations in the method S101 to S104, S201 to S210, S301 to S308, or S401 to S406. For example, the processor 22 is configured to: determine a first sensing amount, where the first sensing amount includes at least one first tuple, the first tuple includes at least one element, the element includes a delay, a distance, an azimuth angle, a pitch angle, strength, a velocity, or a frequency offset, and the first access network device corresponds to a first RAT; obtain a second sensing amount from a second access network device, where the second sensing amount includes at least one second tuple, the second tuple includes at least one element, the second access network device corresponds to a second RAT, and the first RAT is different from the second RAT; and determine a third sensing amount based on the first sensing amount and the second sensing amount, where the third sensing amount includes at least one third tuple, and the third tuple includes at least one element. The transceiver 23 is configured to send the third sensing amount to a first core network device.

Alternatively, the device 2 may be used as a communication apparatus to perform the operations in the method S101 to S104, S201 to S210, S301 to S308, or S401 to S406. For example, the processor 22 is configured to: obtain a first sensing amount from a first access network device, where the first sensing amount includes at least one first tuple, the first tuple includes at least one element, the element includes a delay, a distance, an azimuth angle, a pitch angle, strength, a velocity, or a frequency offset, and the first access network device corresponds to a first RAT; obtain a second sensing amount from a second access network device, where the second sensing amount includes at least one second tuple, the second tuple includes at least one element, the second access network device corresponds to a second RAT, and the first RAT is different from the second RAT; and determine a third sensing amount based on the first sensing amount and the second sensing amount, where the third sensing amount includes at least one third tuple, and the third tuple includes at least one element. The transceiver 23 is configured to send the third sensing amount to a first core network device.

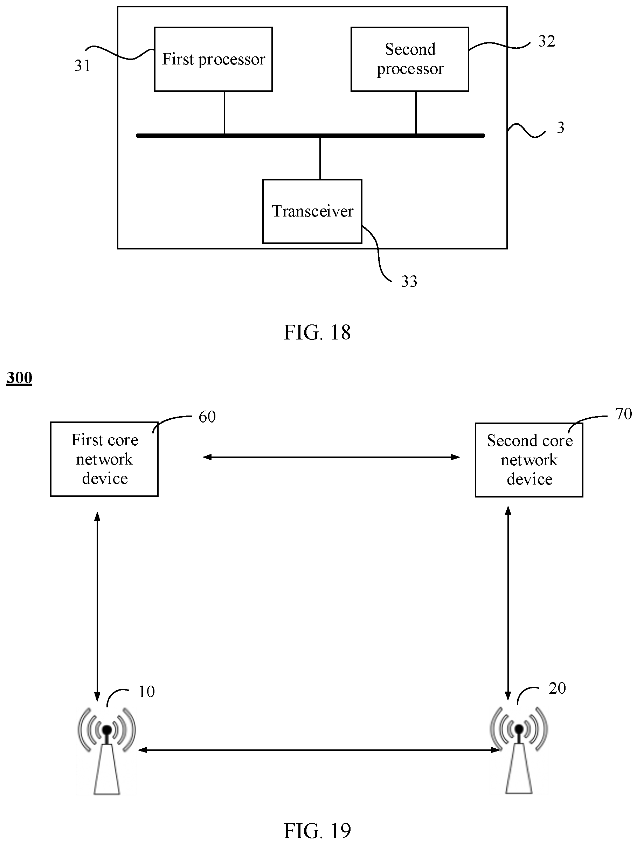

In a possible implementation, when the first access network device and the second access network device are deployed on a same site, the first access network device and the second access network device may use different hardware devices, for example, different devices in the foregoing example. Alternatively, the first access network device and the second access network device may share a same set of hardware devices. FIG. 18 is a diagram of a structure of a device 3 according to an embodiment of this application. In the device 3, the first access network device and the second access network device share a same set of hardware devices. As shown in FIG. 18, the device 3 includes a first processor 31, a second processor 32, and a transceiver 33. The first processor 31 is configured to perform operations of the first access network device like the base station 10 other than receiving and sending in the foregoing example. The second processor 32 is configured to perform operations of the second access network device like the base station 20 other than receiving and sending in the foregoing example. The transceiver 33 is configured to perform receiving and sending operations.

An embodiment of this application further provides a communication system. FIG. 19 is a diagram of a structure of a system 300 according to an embodiment of this application. Refer to FIG. 19. The system 300 includes a first access network device like the base station 10, a second access network device like the second base station 20, the first core network device 60, and the second core network device 70. With reference to the method parts in embodiments of this application, the system may perform operations thereof or perform variations of the operations thereof, for example, is applicable to the methods provided in FIG. 4, FIG. 5 and FIG. 7, to perform operations thereof or perform variations of the operations thereof.

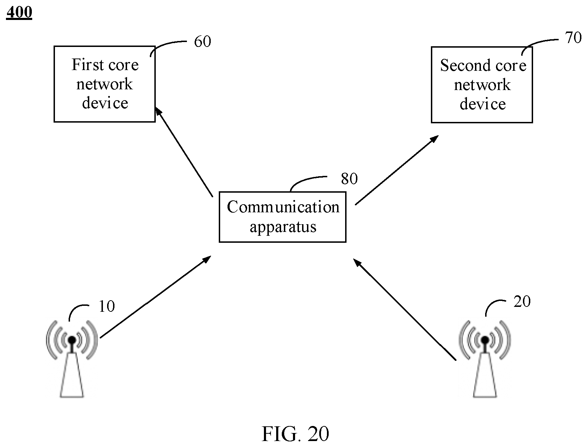

FIG. 20 is a diagram of a structure of a system 400 according to an embodiment of this application. The system 400 includes a first access network device like the first base station 10, a second access network device like the second base station 20, the first core network device 60, the second core network device 70, or the communication apparatus 80. With reference to the method parts in embodiments of this application, the system may perform operations thereof or perform variations of the operations thereof, for example, is applicable to the method provided in FIG. 9, to perform operations thereof or perform variations of the operations thereof.

An embodiment of this application further provides a computer-readable storage medium. The computer-readable storage medium stores instructions. When the instructions are run on a processor, some or all operations in any method according to any one of the foregoing embodiments are implemented.

An embodiment of this application further provides a computer program product, including a computer program. When the computer program is run on a processor, some or all operations in any method according to any one of the foregoing embodiments are implemented.

An embodiment of this application further provides a chip, including an interface circuit and a processor. The interface circuit is connected to the processor, and the processor is configured to cause the chip to perform some or all operations in any method according to any one of the foregoing embodiments.

An embodiment of this application further provides a chip system, including a processor. The processor is coupled to a memory. The memory is configured to store a program or instructions. When the program or the instructions are executed by the processor, the chip system is caused to implement some or all operations in any method according to any one of the foregoing embodiments.

Optionally, there may be one or more processors in the chip system. The processor may be implemented by using hardware, or may be implemented by using software. When the processor is implemented by using hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-volatile processor, for example, a read-only memory ROM. The memory and the processor may be integrated into a same chip, or may be separately disposed on different chips. A type of the memory and a manner of disposing the memory and the processor are not specifically limited in this embodiment of this application.

For example, the chip system may be an FPGA, an ASIC, a system on chip (System On Chip, SoC), a CPU, an NP, a digital signal processing circuit (Digital Signal Processor, DSP), a micro controller unit (Micro Controller Unit, MCU), a programmable controller (Programmable Logic Device, PLD), or another integrated chip.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical service division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in the form of the software service unit and sold or used as an independent product, the integrated unit may be stored in a computer-readable storage medium. Based on such an understanding, all or some of the technical solutions in this application may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a ROM, a RAM (Random Access Memory), a magnetic disk, or an optical disc.

A person skilled in the art should be aware that in the foregoing one or more examples, the services described in this application may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

In the foregoing specific implementations, the objectives, technical solutions, and the benefits of this application are further described in detail. It should be understood that the foregoing descriptions are merely specific implementations of this application.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A communication method, comprising:
determining a first sensing amount, wherein the first sensing amount comprises at least one first tuple, each first tuple comprises at least one element, the element comprises a delay, a distance, an azimuth angle, a pitch angle, strength, a velocity, or a frequency offset, and the first access network device corresponds to a first radio access technology RAT;
obtaining a second sensing amount from a second access network device, wherein the second sensing amount comprises at least one second tuple, each second tuple comprises at least one element, the second access network device corresponds to a second RAT, and the first RAT is different from the second RAT;
determining a third sensing amount based on the first sensing amount and the second sensing amount, wherein the third sensing amount comprises at least one third tuple, and each third tuple comprises at least one element; and
sending the third sensing amount to a first core network device.

2. The method according to claim 1, further comprising:
sending the first sensing amount to the second access network device.

3. The method according to claim 1 or 2, comprising:
the first RAT is a 5th generation mobile communication technology or an evolution of the 5th generation mobile communication technology; and
the second RAT is a 6th generation mobile communication technology or long term evolution LTE.

4. The method according to any one of claims 1 to 3, wherein
one tuple corresponds to one target, the target comprises an electromagnetic scatterer or an object, and the tuple comprises the first tuple, the second tuple, and the third tuple.

5. A communication method, comprising:
obtaining a first sensing amount from a first access network device, wherein the first sensing amount comprises at least one first tuple, each first tuple comprises at least one element, the element comprises a delay, a distance, an azimuth angle, a pitch angle, strength, a velocity, or a frequency offset, and the first access network device corresponds to a first radio access technology RAT;
obtaining a second sensing amount from a second access network device, wherein the second sensing amount comprises at least one second tuple, each second tuple comprises at least one element, the second access network device corresponds to a second RAT, and the first RAT is different from the second RAT;
determining a third sensing amount based on the first sensing amount and the second sensing amount, wherein the third sensing amount comprises at least one third tuple, and each third tuple comprises at least one element; and
sending the third sensing amount to a first core network device.

6. The method according to claim 5, further comprising:
determining a fourth sensing amount based on the first sensing amount and the second sensing amount, wherein the fourth sensing amount comprises at least one fourth tuple, and each fourth tuple comprises at least one element; and
sending the fourth sensing amount to a second core network device.

7. The method according to claim 5 or 6, wherein
the first RAT is a 5th generation mobile communication technology or an evolution of the 5th generation mobile communication technology; and
the second RAT is a 6th generation mobile communication technology or long term evolution LTE.

8. The method according to any one of claims 5 to 7, wherein
one tuple corresponds to one target, the target comprises an electromagnetic scatterer or an object, and the tuple comprises the first tuple, the second tuple, the third tuple, and the fourth tuple.

9. A first access network device, comprising:
a processing module, configured to determine a first sensing amount, wherein the first sensing amount comprises at least one first tuple, each first tuple comprises at least one element, the element comprises a delay, a distance, an azimuth angle, a pitch angle, strength, a velocity, or a frequency offset, and the first access network device corresponds to a first radio access technology RAT;
an obtaining module, configured to obtain a second sensing amount from a second access network device, wherein the second sensing amount comprises at least one second tuple, each second tuple comprises at least one element, the second access network device corresponds to a second RAT, and the first RAT is different from the second RAT, wherein
the processing module is further configured to determine a third sensing amount based on the first sensing amount and the second sensing amount, wherein the third sensing amount comprises at least one third tuple, and each third tuple comprises at least one element; and
a sending module, configured to send the third sensing amount to a first core network device.

10. The device according to claim 9, wherein
the sending module is further configured to send the first sensing amount to the second access network device.

11. The device according to claim 9 or 10, wherein
the first RAT is a 5th generation mobile communication technology or an evolution of the 5th generation mobile communication technology; and
the second RAT is a 6th generation mobile communication technology or long term evolution LTE.

12. The device according to any one of claims 9 to 11, wherein
one tuple corresponds to one target, the target comprises an electromagnetic scatterer or an object, and the tuple comprises the first tuple, the second tuple, and the third tuple.

13. A communication apparatus, comprising:
an obtaining module, configured to obtain a first sensing amount from a first access network device, wherein the first sensing amount comprises at least one first tuple, each first tuple comprises at least one element, the element comprises a delay, a distance, an azimuth angle, a pitch angle, strength, a velocity, or a frequency offset, and the first access network device corresponds to a first radio access technology RAT, wherein
the obtaining module is further configured to obtain a second sensing amount from a second access network device, wherein the second sensing amount comprises at least one second tuple, each second tuple comprises at least one element, the second access network device corresponds to a second RAT, and the first RAT is different from the second RAT;
a processing module, configured to determine a third sensing amount based on the first sensing amount and the second sensing amount, wherein the third sensing amount comprises at least one third tuple, and each third tuple comprises at least one element; and
a sending module, configured to send the third sensing amount to a first core network device.

14. The communication apparatus according to claim 13, wherein
the processing module is further configured to determine a fourth sensing amount based on the first sensing amount and the second sensing amount, wherein the fourth sensing amount comprises at least one fourth tuple, and each fourth tuple comprises at least one element; and
the sending module is further configured to send the fourth sensing amount to a second core network device.

15. The communication apparatus according to claim 13 or 14, wherein
the first RAT is a 5th generation mobile communication technology or an evolution of the 5th generation mobile communication technology; and
the second RAT is a 6th generation mobile communication technology or long term evolution LTE.

16. The communication apparatus according to any one of claims 13 to 15, wherein
one tuple corresponds to one target, the target comprises an electromagnetic scatterer or an object, and the tuple comprises the first tuple, the second tuple, the third tuple, and the fourth tuple.

17. A communication device, wherein the communication device comprises a processor and a storage medium, the storage medium stores instructions, and when the instructions are run by the processor, the method according to any one of claims 1 to 4 is implemented, or the method according to any one of claims 5 to 8 is implemented.

18. A computer-readable storage medium, wherein the computer-readable storage medium comprises instructions, and when the instructions are run by a processor, the method according to any one of claims 1 to 4 is implemented, or the method according to any one of claims 5 to 8 is implemented.

19. A computer program product, wherein the computer program product comprises instructions, and when the instructions are run by a processor, the method according to any one of claims 1 to 4 is implemented, or the method according to any one of claims 5 to 8 is implemented.

20. A system, comprising:
the first access network device according to any one of claims 9 to 12; and
the communication apparatus according to any one of claims 13 to 16.
